(19) Europäisches Patentamt
European Patent Office
Office européen des brevets

(11) **EP 3 051 488 A1**

(12) **EUROPEAN PATENT APPLICATION**

(43) Date of publication:
**03.08.2016 Bulletin 2016/31**

(51) Int Cl.:
*G06T 5/00* (2006.01)    *H04N 19/136* (2014.01)
*H04N 19/186* (2014.01)    *H04N 19/182* (2014.01)

(21) Application number: **15305118.0**

(22) Date of filing: **30.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Lasserre, Sébastien
35576 Cesson-Sevigne (FR)**

• **Le Leannec, Fabrice
35576 Cesson-Sevigne (FR)**
• **Lemerle, Stéphane
92130 Issy-les-Moulineaux (FR)**

(74) Representative: **Huchet, Anne
Technicolor
1, rue Jeanne d'Arc
92443 Issy-les-Moulineaux Cedex (FR)**

(54) **A method and apparatus for inverse-tone mapping a picture**

(57)    The present disclosure generally relates to a method and device for inverse-tone mapping a picture. The method comprising:
- obtaining (20) a first component (Y) by applying (20), on a luminance component (L) obtained from the picture, a non-linear function that depends on a modulation value (Ba), in order that the dynamic of the first component (Y) is increased compared to the dynamic of the luminance component (L),

characterized in that said modulation value (Ba) is obtained (50) from said luminance component (L).

**Fig. 1**

**Description**

**2. Field.**

The present disclosure generally relates to picture/video inverse-tone mapping. Particularly, but not exclusively, the technical field of the present disclosure is related to inverse-tone mapping a picture whose pixels values belong to a low-dynamic range.

**3. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the following, a color picture contains several arrays of samples (pixel values) in a specific picture/video format which specifies all information relative to the pixel values of a picture (or a video) and all information which may be used by a display and/or any other device to visualize and/or decode a picture (or video) for example. A color picture comprises at least one component, in the shape of a first array of samples, usually a luma (or luminance) component, and at least one another component, in the shape of at least one other array of samples. Or, equivalently, the same information may also be represented by a set of arrays of color samples (color component), such as the traditional tri-chromatic RGB representation.

A pixel value is represented by a vector of **C** values, where **c** is the number of components. Each value of a vector is represented with a number of bits which defines a maximal dynamic range of the pixel values.

Standard-Dynamic-Range pictures (SDR pictures) are color pictures whose luminance values are represented with a limited dynamic usually measured in power of two or f-stops. SDR pictures have a dynamic around 10 fstops, i.e. a ratio 1000 between the brightest pixels and the darkest pixels in the linear domain, and are coded with a limited number of bits (most often 8 or 10 in HDTV (High Definition Television systems) and UHDTV (Ultra-High Definition Television systems) in a non-linear domain, for instance by using the ITU-R BT.709 OEFT (Optico-Electrical-Transfer-Function) (Rec. ITU-R BT.709-5, April 2002) or ITU-R BT.2020 OETF (Rec. ITU-R BT.2020-1, June 2014) to reduce the dynamic. This limited non-linear representation does not allow correct rendering of small signal variations, in particular in dark and bright luminance ranges. In High-Dynamic-Range pictures (HDR pictures), the signal dynamic is much higher (up to 20 f-stops, a ratio one million between the brightest pixels and the darkest pixels) and a new non-linear representation is needed in order to maintain a high accuracy of the signal over its entire range. In HDR pictures, raw data are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits. More compact representation do exist like, for instance, the 10 or 12 bit format obtained by using the so-called PQ OETF defined in SMPTE 2084 (SMPTE standard: High Dynamic Range Electro-Optical Transfer Function of Mastering Reference Displays, SMPTE ST 2084:2014*).

A color gamut is a certain complete set of colors. The most common usage refers to a set of colors which can be accurately represented in a given circumstance, such as within a given color space or by a certain output device.

A color volume is defined by a color space and a dynamic range of the values represented in said color space.

For example, a color gamut is defined by a RGB ITU-R Recommendation BT.2020 color space for UHDTV. An older standard, ITU-R Recommendation BT.709, defines a smaller color gamut for HDTV. In SDR, the dynamic range is defined officially up to 100 nits (candela per square meter) for the color volume in which data are coded, although some display technologies may show brighter pixels.

High Dynamic Range pictures (HDR pictures) are color pictures whose luminance values are represented with a HDR dynamic that is higher than the dynamic of a SDR picture.

The HDR dynamic is not yet defined by a standard but one may expect a dynamic range up to a few thousands nits. For instance, a HDR color volume is defined by a RGB BT.2020 color space and the values represented in said RGB color space belong to a dynamic range from 0 to 4000 nits. Another example of HDR color volume is defined by a RGB BT.2020 color space and the values represented in said RGB color space belong to a dynamic range from 0 to 1000 nits.

The context of the invention is the distribution, for instance on a broadcast infrastructure, of SDR picture/videos to be received by a HDR-capable device. More precisely, a receiver may be a Set Top Box (STB) connected to a HDR display, or a tablet with a more-than-SDR display. The distributed SDR video could then be displayed as is on the receiver side but the viewer would not profit from the full dynamic capability of his display. Thus, an intermediate process of enhancing the SDR video to a HDR video, usually called an inverse-tone mapping, would provide a better experience, if done correctly, to the viewer. Inverse-tone mapping a picture may be compared to up-sampling processes that allow displaying HDTV on UHD displays. Of course the user experience may not be as good as native HDR, but it can be noticeably better than by using the legacy SDR workflow only.

The problem to be solved is to provide such a inverse-tone mapping that maps SDR picture/videos on HDR picture/videos, a priori without HDR-oriented external meta-data to help the mapping.

In addition, such a inverse-tone mapping should preserve the SDR scene in terms of color (hue, saturation), temporal consistency (relative luminance between scenes) and scene balance (dark zones remain relatively dark, etc.). It should be easily implementable on a device like a STB, a tablet, a TV set, etc., and adaptable to the characteristics of each device (peak luminance, f-stops).

The present disclosure has been devised with the foregoing in mind.

**4. Summary.**

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the drawbacks of the prior art with a method for inverse-tone mapping a picture comprising:

- obtaining a first component by applying, on a luminance component obtained from the picture, a non-linear function that depends on a modulation value, in order that the dynamic of the first component is increased compared to the dynamic of the luminance component.

Said modulation value is obtained from said luminance component according to the present disclosure.

This avoid transmitting of the modulation value.

According to an embodiment, the luminance component is multiplied by the modulation value after having applied the non-linear function on the luminance component

This embodiment is advantageous because it expands the range of the picture to be inverse tone-mapped in a perceptually good way such that to expand both bright and dark areas while keeping all texture details.

According to an embodiment, the non-linear function is the inverse of either a gamma curve or a Slog curve.

This embodiment is advantageous because it expands bright areas such as to give a good perceptual range of dynamic for bright objects and specular lights.

According to an embodiment, the method further comprises:

- obtaining two chrominance components from the picture; and
- obtaining at least one color component of the inverse-tone mapped picture from the first component and from said two chrominance components.

According to an embodiment, the obtaining at least one color component further depends on a first factor that depends on the luminance component.

According to an embodiment, the first factor is a ratio of the luminance component over the first component.

This embodiment is advantageous because it prevents the inverse tone mapping process to over extend the dynamic of the inverse tone-mapped picture.

According to an embodiment, the obtaining at least one color component comprises:

- obtaining three intermediate color components from said first component and the two chrominance components; and
- obtaining said at least color component by scaling each intermediate color component by the first factor.

This embodiment is advantageous because it helps preserving the hue the picture to be inverse tone-mapped.According to an embodiment, the obtaining at least one color component comprises:

- obtaining two intermediate chrominance component by scaling each chrominance component according to the first factor; and
- obtaining said at least one color components from said first component and said two intermediate chrominance components.

According to an embodiment, the obtaining at least one color component comprises:

- obtaining two intermediate chrominance component by scaling each chrominance component by a value equals to the square root of the first factor; and
- obtaining said at least one color components by:
- obtaining a second component by combining together the two intermediate chrominance components and the first component;
- obtaining at least one intermediate color components by linearly combining together the intermediate chrominance component and said second component; and
- obtaining the three color components by taking the square of each intermediate color components.

This embodiment is advantageous because it requires a limited amount of computation while preserving the perceptual quality of the previous embodiments.

According to an embodiment, the obtaining the luminance component from the picture comprises linearly combining together an input luminance component obtained from the picture and two input chrominance components obtained from the picture.

This embodiment is advantageous because it helps matching the gamut of the picture to be inverse tone-mapped and the gamut of the resulting inverse tone-mapped picture, i.e. it helps preserving colors.

According to an embodiment, linearly combining together the input luminance component and the two input chrominance components used coefficients which are obtained from a bitstream.

This embodiment is advantageous because the value obtained from a bitstream may be optimal for the linear combination such that the colors are better preserved.

According to an embodiment, the obtaining the two chrominance components comprises scaling each of the two input chrominance components by a second factor that depends on both the modulation value and the value of each pixel of the luminance component.

This embodiment is advantageous because it helps matching further the gamut of the picture to be inverse tone-mapped and the gamut of the resulting inverse tone-mapped picture, i.e. it helps preserving colors further than the preceding embodiments.

According to an embodiment, the second factor is obtained by minimizing a gamut distorsion calculated between a targeted gamut and a gamut of the colors obtained from the luminance and chrominance components.

This embodiment is advantageous because the perceived colors (hue and perceived saturation) are preserved during the inverse tone mapping process, i.e. the color of the obtained inverse tone mapped picture match well the colors of the original picture to be tone-mapped.

According to other of its aspects, the disclosure relates to devices comprising a processor configured to implement the above methods, a computer program product comprising program code instructions to execute the steps of the above methods when this program is executed on a computer, a processor readable medium having stored therein instructions for causing a processor to perform at least the steps of the above methods, and a non-transitory storage medium carrying instructions of program code for executing steps of the above methods when said program is executed on a computing device.

The specific nature of the disclosure as well as other objects, advantages, features and uses of the disclosure will become evident from the following description of embodiments taken in conjunction with the accompanying drawings.

**5. Brief Description of Drawings.**

In the drawings, an embodiment of the present disclosure is illustrated. It shows:

- **Fig. 1** shows schematically a diagram of the steps of a method of inverse-tone mapping a picture in accordance with an embodiment of the disclosure;
- **Fig. 2** shows schematically a diagram of the steps of a method of inverse-tone mapping a picture in accordance with an embodiment of the disclosure;
- **Fig. 3** shows schematically a diagram of the steps of a method of inverse-tone mapping a picture in accordance with an embodiment of the disclosure;
- **Fig. 4** shows schematically a diagram of the steps of a method of inverse-tone mapping a picture in accordance with an embodiment of the disclosure;
- **Fig. 5a** shows schematically a diagram of the sub-steps of the step 30 in accordance with an embodiment of the disclosure;
- **Fig. 5b** shows schematically a diagram of the sub-steps of the step 30 in accordance with an embodiment of the disclosure;
- **Fig. 6** shows schematically a diagram of the sub-steps of the step 10 in accordance with an embodiment of the disclosure;

- **Fig. 7** shows schematically a diagram of the sub-steps of the step 10 in accordance with an embodiment of the disclosure;
- **Fig. 8** shows schematically a diagram of the sub-steps of the step 231 in accordance with an embodiment of the disclosure; and
- **Fig. 9** shows an example of an architecture of a device in accordance with an embodiment of the disclosure.

Similar or same elements are referenced with the same reference numbers.

## 6. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

In an embodiment, a factor depends on a modulation value Ba. A modulation (or backlight) value is usually associated with an HDR picture and is representative of the brightness of the HDR picture. A modulation value Ba may be an average, median, min or max value of the pixel values of the luminance of an HDR picture. These operations may be performed in the linear HDR luminance domain $Y_{lin}$ or in a non-linear domain like $\ln(Y)$ or $Y^{\gamma}$ with $\gamma < 1$.

Here, the term (modulation) backlight is used by analogy with TV sets made of a color panel, like a LCD panel for instance, and a rear illumination apparatus, like a LED array for instance. The rear apparatus, usually generating white light, is used to illuminate the color panel to provide more brightness to the TV. As a consequence, the luminance of the TV is the product of the luminance of rear illuminator and of the luminance of the color panel. This rear illuminator is often called "modulation" or "backlight" and its intensity is somewhat representative of the brightness of the overall scene.

The disclosure is described for inverse-tone mapping a color picture but extends to the inverse-tone mapping of a sequence of pictures (video) because each color picture of the sequence is sequentially inverse-tone mapped as described below.

In the following, a picture I is considered as having a luminance component and, potentially, two chrominance components or equivalently, three color components.

The present disclosure is not limited to any color space in which the colors of the picture I are represented but extends to any color space such as RGB, CIELUV, XYZ, CIELab, etc.

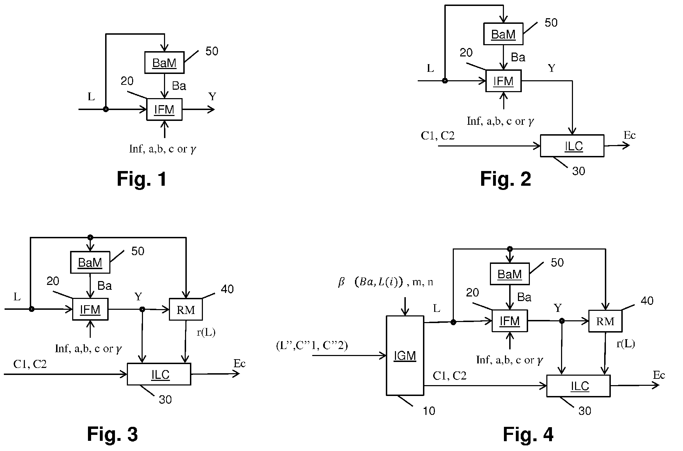

**Fig. 1** shows schematically a diagram of the steps of a method of inverse-tone mapping a picture I in accordance with an embodiment of the disclosure.

In step 20, a module IFM obtains a first component Y by applying, on a luminance component L obtained from the picture I, a non-linear function **f⁻¹** that depends on a modulation value Ba which is obtained (step 50) from the luminance component L.

The module IFM obtains the first component Y in order that the dynamic of the first component Y is increased compared to the dynamic of the luminance component L:

$$Y = f^{-1}(Ba, L) \qquad (1)$$

According to an embodiment, the luminance component L is multiplied by the modulation value Ba after having applied the non-linear function **f⁻¹**:

$$Y = Ba * f^{-1}(L) \qquad (2)$$

According to an embodiment, the non-linear function **f⁻¹** is the inverse of a gamma function.

The component Y is then given by:

$$Y_1 = \frac{L^{1/\gamma}}{B}$$

where $Y_1$ equals Y or Y/Ba according to the embodiments of eq. (1) or (2), B is a constant value, $\gamma$ is a parameter (real value strictly below 1).

According to an embodiment, the non-linear function **f⁻¹** is the inverse of a S-Log function. The component $Y_1$ is then given by:

$$Y_1 = exp\left(\frac{L-c}{a}\right) - b$$

where **a,** b and **c** are parameters (real values) of a SLog curve determined such that f(0) and f(1) are invariant, and the derivative of the SLog curve is continuous in 1 when prolonged by a gamma curve below 1. Thus, **a, b** and **c** are functions of the parameter $\gamma$.

Typical values are shown in Table 1.

**Table 1**

| $\gamma$ | a | b | c |
|---|---|---|---|
| 1/2.0 | 0.6275 | 0.2550 | 0.8575 |
| 1/2.4 | 0.4742 | 0.1382 | 0.9386 |
| 1/2.8 | 0.3861 | 0.0811 | 0.9699 |

In an advantageous embodiment, a value of $\gamma$ close to 1/2.5 is efficient in terms of HDR compression performance as well as good viewability of the obtained SDR luma. Thus, the 3 parameters may advantageously take the following values: a = 0.44955114, b = 0.12123691, c = 0.94855684.

According to an embodiment, the value Ba and/or the parameters of the non-linear function **f⁻¹** (such as **a, b,**

**c** or *γ*) is (are) obtained from a local or remote memory (for example a Look-Up-Table) and/or from a bitstream.

According to an embodiment, the non-linear function **f** is the inverse of either a gamma correction or a SLog correction according to the pixel values of the first component Y.

Applying an inverse gamma correction on the luminance component L, pulls up the dark regions but does not lower enough high lights to avoid burning of bright pixels.

Then, according to an embodiment, the module IFM applies either the inverse gamma correction or the inverse SLog correction according to the pixel values of the luminance component L.

For example, when the pixel value of the luminance component L is below a threshold (equal to 1), then the inverse gamma correction is applied and otherwise the inverse SLog correction is applied.

**Fig. 2** shows schematically a diagram of the steps of a method of inverse-tone mapping a picture in accordance with an embodiment of the disclosure.

In step 30, a module ILC obtains at least one color component Ec of the color picture to be inverse-tone mapped from the first component Y and two chrominance C1, C2 components obtained from the picture I.

The inverse-tone mapped picture is then formed by combining together said at least one color component Ec.

According to a variant of the embodiment in **Fig. 2,** illustrated in **Figs. 3** and **4,** the module ILC obtains at least one color component Ec from the first component Y, the two chrominance component C1, C2, and from a factor r(L) that depends on the luminance component L.

The factor r(L) may be obtained either from a local or remote memory (such a Look-Up-Table) or from a bitstream.

According to this variant of the embodiment in **Fig. 2,** the first component Y and the two chrominance components C1, C2 are related to intermediate components Dc by the following model:

$$Y = A_1 \begin{bmatrix} E_1 \\ E_2 \\ E_3 \end{bmatrix} = A_1 \begin{bmatrix} \text{EOTF}(D_1) \\ \text{EOTF}(D_2) \\ \text{EOTF}(D_3) \end{bmatrix} \qquad (3)$$

and

$$\begin{bmatrix} C_1 \\ C_2 \end{bmatrix} = \begin{bmatrix} A_2 \\ A_3 \end{bmatrix} \begin{bmatrix} D_1 \\ D_2 \\ D_3 \end{bmatrix} \qquad (4)$$

where EOTF is an Electro-Optical Transfer Function (inverse of an OETF), A1, A2 and A3 are columns of a 3x3 matrix A that determines the transform of the picture I to be encoded from the color space (E1, E2, E3), in which the pixel values of the picture to be encoded are represented, to the color space (Y, C1, C2).

Equation (4) provides

$$\begin{cases} D_2 = \vartheta_2 D_1 + L_2(C_1, C_2) \\ D_3 = \vartheta_3 D_1 + L_3(C_1, C_2) \end{cases} \qquad (5)$$

where OETF($E_c$) = $D_c$, $\vartheta_i$ are constants depending on the matrix A and $L_i$ are linear functions also depending on the matrix A. Then, equation (3) becomes:

$$Y = A_{11}\text{EOTF}(D_1) + A_{12}\text{EOTF}(D_2) + A_{13}\text{EOTF}(D_3) \qquad (6)$$

and then

$$Y = A_{11}\text{EOTF}(D_1) + A_{12}\text{EOTF}(\vartheta_2 D_1 + L_2(C_1, C_2)) + A_{13}\text{EOTF}(\vartheta_3 D_1 + L_3(C_1, C_2)) \qquad (7)$$

Equation (7) is an implicit equation on $D_1$ only. Depending on the expression of the EOTF, equation (7) can be more or less solved simply. Once solved, $D_1$ is obtained, $D_2$, $D_3$ are deduced from $D_1$ by equation (5). Then the color components Ec are obtained by applying the EOTF on the three obtained intermediate components Dc, i.e. Ec = EOTF(Dc).

In this general case, i.e. when a general EOTF is applied on each intermediate component Dc, there exist no analytic solution to equation (7). For instance when the EOTF is the ITU-R BT.709/2020 EOTF, and the equation (7) may be solved numerically by using the so-called Newton's method or any other numerical method to find the root of a regular function. However, this leads to highly complex decoders.

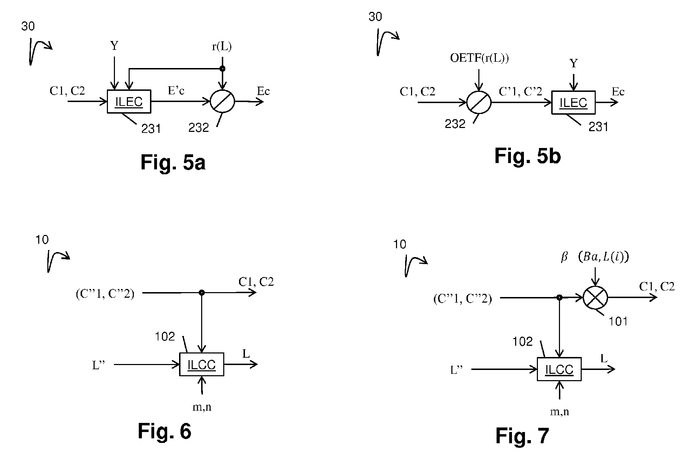

In this general case, according to a first embodiment of the step 30, illustrated in **Fig. 5a**, in step 231, a module ILEC obtains three intermediate color component E'c from the first component Y, the two chrominance component C1, C2 and the factor r(L). In step 232, the three color components Ec are obtained by scaling each intermediate color component E'c by the factor r(L):

$$Ec(i) = E'c(i)/r(L(i))$$

where $r(L(i))$ is the factor given by step 40 that depends on the value L(i) of a pixel **i** of the luminance component L, $E'_c(i)$ is the value of the pixel **i** of an intermediate color component E'c, and $E_c(i)$ is the value of the pixel **i** of the color component Ec.

Scaling by a factor means multiplying by said factor or dividing by the inverse of said factor.

Scaling each color component E'c by the factor r(L) that depends on the luminance component L preserves the hue of the colors of the color picture I.

According to an embodiment of the step 40, the factor r(L) is the ratio of the luminance component L over the component Y:

$$r(L(i)) = \frac{L(i)}{Y(i)}$$

with Y(i) being the value of a pixel **i** of the first component Y. Actually, the value Y(i) of a pixel of the first component Y depends non-ambiguously on the value L(i) such that the ratio can be written as a function of L(i) only.

This embodiment is advantageous because scaling each color component Ec by the factor r(L) that further depends on the first component Y preserves the hue of the colors of the picture I and thus improves the visual quality of the inverse-tone mapped picture.

According to an embodiment of the step 232, the factor r(L) is given by:

$$r(L(i)) = \frac{max\{5, L(i)\}}{2048 max\{0.01, Y(i)\}}$$

This last embodiment is advantageous because it prevents the factor from going to zero for very dark pixels, i.e. allows the ratio to be invertible regardless of the pixel value.

According to a variant of this first embodiment of the step 30, the EOTF is then a square function.

According to another variant of this first embodiment, the EOTF is then a cubic function.

When the OETF, inverse of the EOTF used, fulfills the commutation condition, namely

$$OETF(x*y) = OETF(x) * OETF(y),$$

the component Y and the color components Ec are related by:

$$Y = A_1 \begin{bmatrix} E_1 \\ E_2 \\ E_3 \end{bmatrix} = A_1 \begin{bmatrix} EOTF(F_1) \\ EOTF(F_2) \\ EOTF(F_3) \end{bmatrix} \qquad (8)$$

where Fc are components equal to OETF(Ec) and

$$\begin{bmatrix} C'_1 \\ C'_2 \end{bmatrix} = \begin{bmatrix} C_1 \\ C_2 \end{bmatrix} / \text{OETF}(r(L)) = \begin{bmatrix} A_2 \\ A_3 \end{bmatrix} \begin{bmatrix} D_1 \\ D_2 \\ D_3 \end{bmatrix} / \text{OETF}(r(L))$$

$$= \begin{bmatrix} A_2 \\ A_3 \end{bmatrix} \begin{bmatrix} \text{OETF}(E'_1) \\ \text{OETF}(E'_2) \\ \text{OETF}(E'_3) \end{bmatrix} / \text{OETF}(r(L)),$$

such that the commutation condition provides

$$\begin{bmatrix} C'_1 \\ C'_2 \end{bmatrix} = \begin{bmatrix} A_2 \\ A_3 \end{bmatrix} \begin{bmatrix} \text{OETF}(E'_1/r(L)) \\ \text{OETF}(E'_2/r(L)) \\ \text{OETF}(E'_3/r(L)) \end{bmatrix} = \begin{bmatrix} A_2 \\ A_3 \end{bmatrix} \begin{bmatrix} \text{OETF}(E_1) \\ \text{OETF}(E_2) \\ \text{OETF}(E_3) \end{bmatrix} = \begin{bmatrix} A_2 \\ A_3 \end{bmatrix} \begin{bmatrix} F_1 \\ F_2 \\ F_3 \end{bmatrix} \quad (9)$$

Equation (9) provides

$$\begin{cases} F_2 = \vartheta_2 F_1 + L_2(C'_1, C'_2) \\ F_3 = \vartheta_3 F_1 + L_3(C'_1, C'_2) \end{cases}$$

where $\vartheta_i$ are constants depending on the matrix A and $L_i$ are linear functions also depending on the matrix A.
Then, equation (8) becomes:

$$Y = A_{11}\text{EOTF}(F_1) + A_{12}\text{EOTF}(F_2) + A_{13}\text{EOTF}(F_3) \quad (10)$$

and then

$$Y = A_{11}\text{EOTF}(F_1) + A_{12}\text{EOTF}\left(\vartheta_2 F_1 + L_2(C'_1, C'_2)\right) +$$

$$A_{13}\text{EOTF}\left(\vartheta_3 F_1 + L_3(C'_1, C'_2)\right) \quad (11)$$

When the OETF fulfills the commutation conditions, according to a second embodiment of the step 30, illustrated in **Fig. 5b,** in step 232, two intermediate components C'1 and C'2 are obtained by scaling the two chrominance components C1 and C2 by the factor OEFT(r(L(i))) where OETF is the inverse of EOTF:

$$C'1(i) = \frac{C1(i)}{OETF(r(L(i)))}$$

$$C'2(i) = \frac{C2(i)}{OETF(r(L(i)))}$$

where $r(L(i))$ is the factor given by step 40 that depends on the value L(i) of a pixel **i** of the luminance component L, $C'_1(i), C'_2(i)$ is respectively the value of the pixel **i** of the component C'1 and C'2, $C_1$ (i), $C_2$ (i) is respectively the value of the pixel **i** of the component C1 and C2.
In step 231, the module ILEC obtains the three color components Ec from the first component Y and the two intermediate chrominance components C'1, C'2 as explained above.

According to a variant of this second embodiment of the step 30, the EOTF is then a square function. Then, in step 232 in **Fig. 5b,** the two intermediate components C'1 and C'2 are obtained by scaling the two chrominance components C1 and C2 by the factor $\sqrt{r(L(i))}$:

$$C'1(i) = \frac{C1(i)}{OETF(r(L(i)))} = \frac{C1(i)}{\sqrt{r(L(i))}}$$

$$C'2(i) = \frac{C2(i)}{OETF(r(L(i)))} = \frac{C2(i)}{\sqrt{r(L(i))}}$$

Equation(8) becomes:

$$Y = A_1 \begin{bmatrix} E_1 \\ E_2 \\ E_3 \end{bmatrix} = A_1 \begin{bmatrix} F_1^2 \\ F_2^2 \\ F_3^2 \end{bmatrix} \qquad (10)$$

and

$$\begin{bmatrix} C'_1 \\ C'_2 \end{bmatrix} = \begin{bmatrix} C_1 \\ C_2 \end{bmatrix} / \sqrt{r(L)} = \begin{bmatrix} A_2 \\ A_3 \end{bmatrix} \begin{bmatrix} D_1 \\ D_2 \\ D_3 \end{bmatrix} / \sqrt{r(L)} = \begin{bmatrix} A_2 \\ A_3 \end{bmatrix} \begin{bmatrix} \sqrt{E'_1} \\ \sqrt{E'_2} \\ \sqrt{E'_3} \end{bmatrix} / \sqrt{r(L)}$$

such that the commutation provides

$$\begin{bmatrix} C'_1 \\ C'_2 \end{bmatrix} = \begin{bmatrix} A_2 \\ A_3 \end{bmatrix} \begin{bmatrix} \sqrt{E'_1/r(L)} \\ \sqrt{E'_2/r(L)} \\ \sqrt{E'_2/r(L)} \end{bmatrix} = \begin{bmatrix} A_2 \\ A_3 \end{bmatrix} \begin{bmatrix} \sqrt{E_1} \\ \sqrt{E_2} \\ \sqrt{E_3} \end{bmatrix} = \begin{bmatrix} A_2 \\ A_3 \end{bmatrix} \begin{bmatrix} F_1 \\ F_2 \\ F_3 \end{bmatrix} \qquad (11)$$

Equation (11) becomes:

$$Y = A_{11}F_1^2 + A_{12}F_2^2 + A_{13}F_3^2 \qquad (12)$$

And then

$$Y = A_{11}F_1^2 + A_{12}\left(\vartheta_2 F_1 + L_2(C'_1, C'_2)\right)^2 + A_{13}\left(\vartheta_3 F_1 + L_3(C'_1, C'_2)\right)^2$$

(13)

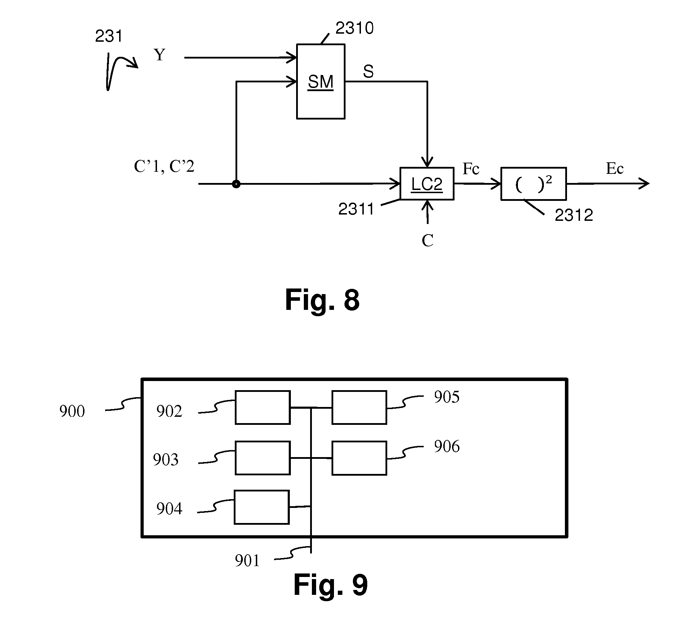

Equation (13) is a second order equation that may be solved analytically. This analytic solution leads to a specific embodiment of the step 231 as illustrated in **Fig. 8.** This embodiment is advantageous because it allows an analytic expression of the EOTF (inverse of the OETF) and thus of the inverse-tone mapped components of the picture.

Moreover, the EOTF is then the square function that is a low complexity process. In step 2310, a module SM obtains a second component S by combining together the two intermediate chrominance components C'1, C'2 and the first component Y:

$$S = \sqrt{Y + k_0 C'^2_1 + k_1 C'^2_2 + k_2 C'_1 C'_2}$$

where $k_0$, $k_1$ and $k_2$ parameters values and $C'^2_c$ means the square of a component $C'_c$ (c=1 or 2).

In step 2311, a module LC2 obtains the three solver components Fc by linearly combining together the intermediate chrominance component C'1, C'2 and a second component S:

$$\begin{bmatrix} F_1 \\ F_2 \\ F_3 \end{bmatrix} = C \begin{bmatrix} S \\ C'_1 \\ C'_2 \end{bmatrix}$$

where C is a 3x3 matrix defined as the inverse of the matrix A.

In step 2312, the three color components Ec are obtained by taking the square of each intermediate color components (Dc):

$$\begin{bmatrix} E_1 \\ E_2 \\ E_3 \end{bmatrix} = \begin{bmatrix} \text{EOTF}(F_1) \\ \text{EOTF}(F_2) \\ \text{EOTF}(F_3) \end{bmatrix} = \begin{bmatrix} (F_1)^2 \\ (F_2)^2 \\ (F_3)^2 \end{bmatrix}$$

The matrix A determines the transform of the picture I to be encoded from the color space (E1, E2, E3), in which the pixel values of the picture to be encoded are represented, to the color space (Y, C1, C2).

Such a matrix depends on the gamut of the color picture to be inverse-tone mapped.

For example, when the picture to be inverse-tone mapped is represented in the BT709 gamut as defined by ITU-R Rec. 709, the matrix A is given by:

$$A = \begin{bmatrix} 0.2126 & 0.7152 & 0.0722 \\ -0.1146 & -0.3854 & 0.5 \\ 0.5 & -0.4541 & 0.0459 \end{bmatrix}$$

and the matrix C is given by:

$$C = \begin{bmatrix} 1 & 0 & 1.5748 \\ 1 & -0.1874 & -0.4681 \\ 1 & 1.8556 & 0 \end{bmatrix}$$

According to a variant of this second embodiment, the OEFT is a cube root function and the EOTF is then a cubic function. Then, in step 232 in **Fig. 5b,** the two intermediate components C'1 and C'2 may then be obtained by scaling the two chrominance components C1 and C2 by the factor $\sqrt[3]{r(L(i))}$:

$$C'1(i) = \frac{C1(i)}{\sqrt[3]{r(L(i))}}$$

$$C'2(i) = \frac{C2(i)}{\sqrt[3]{\mathrm{r(L(i))}}}$$

The EOTF is then a cubic function thus leading to an equation (A14) on $F_1$ being a more complex third order equation which can be solved analytically by the so-called Cardano's method.

Very complex analytic solutions also exist for the fourth order equation (Ferrari's method), but not anymore for an order higher or equal to five as stated by the Abel-Ruffini theorem.

**Fig. 4** shows schematically a diagram of the steps of a method of inverse-tone mapping a picture in accordance with an embodiment of the disclosure.

In step 10, the luminance component L is obtained from the picture by linearly combining together an input luminance component L" obtained from the picture I and two input chrominance components C"1, C"2 obtained from the picture I.

According to an embodiment of the step 10, illustrated in **Fig. 6,** the two final chrominance components C1, C2 equals to the two input chrominance components C"1, C"2, and a module ILCC obtains (step 100) the luminance component L by linearly combining together the input luminance component L" and the two input chrominance components C"1, C"2:

$$\begin{cases} L & = L'' + mC''_1 + nC''_2 \\ \quad C_1 & = C''_1 \qquad\qquad (J1) \\ \quad C_2 & = C''_2 \end{cases}$$

where **m** and **n** are real values (coefficients) that depend on the gamut of the picture I (for instance BT.709 or BT.2020 gamut). Typical values for **m** and **n** are m=n in the interval [0.1,0.5].

According to an embodiment, the real values **m** and **n** are obtained from a remote or local memory such a Look-Up-Table, or from a bitstream.

According to an embodiment of the step 10, illustrated in **Fig. 7,** the two chrominance components C1, C2 are obtained by scaling (step 101) each of the two input chrominance components C"1, C"2 by a factor $\beta$ (*Ba*, *L*(*i*)) that depends on both a modulation value Ba and the value L(i) of each pixel **i** of the luminance component L, and the module ILCC obtains (step 102) the luminance component L by linearly combining together the input luminance component **L"** and the two input chrominance components C"1, C"2:

$$\begin{cases} L & = L'' + mC''_1 + nC''_2 \\ C_1 & = \beta\,(Ba, L(i)) * C''_1 \qquad (J2) \\ C_2 & = \beta\,(Ba, L(i)) * C''_2 \end{cases}$$

where **m** and **n** are real values (coefficients) as explained above, and $\beta$(*Ba, L*(*i*)) is a factor that depends on the modulation value Ba and the value of a pixel I of the luminance component L.

According to an embodiment, the factor $\beta^{-1}$(*Ba, L*(*i*)) is obtained from a bitstream or a Look-Up-Table (LUT) for a specific modulation value Ba and a specific luminance value L(i). Thus, for multiple luminance peak values such as for example, 1000, 1500 and 4000 nits, a specific factor $\beta^{-1}$(*Ba,L*(*i*)) is stored in a LUT for each specific modulation value Ba.

According to a variant, the factor $\beta^{-1}$(*Ba,L*(*i*)) for a specific modulation value Ba is obtained for a value of a pixel of the luminance component L by interpolating the luminance peaks between the multiple luminance peaks for which LUT are stored.

According to an embodiment, the factor $\beta$(*Ba, L*(*i*)) is obtained from the modulation value Ba and the value of a pixel i of the luminance component L as follows.

The factor $\beta^{-1}$(*Ba,L*(*i*),*m,n*) is considered as depending also on the coefficients **m** and **n** which are given as explained in the previous embodiment.

The factor $\beta^{-1}$ is obtained such that a gamut distortion calculated between a targeted gamut G1, such a gamut of the components Ec of an expected HDR picture, and the gamut G2 obtained from the input components L"C"1C"2 is minimized. In other words, the factor $\beta^{-1}$ is the optimal factor under the condition of gamut preservation.

Mathematically speaking, the factor $\beta^{-1}$ is obtained by:

$$\beta^{-1}(Ba_0, L_0, m, n) = argmin_{\beta_{\text{test}}^{-1}} \ GD(\beta_{\text{test}}^{-1}),$$

where $Y_0$ is a given luminance value from which is deduced a luminance value $L_0$, $Ba_0$ is a given modulation and the gamut distorsion $GD(\beta_{\text{test}}^{-1})$ is given by:

$$GD(\beta_{\text{test}}^{-1}) = \sum_j \left(x_j - x'_j\right)^2 + \left(y_j - y'_j\right)^2$$

in which the gamut distorsion is defined by the sum of the square error between an element $(x_j, y_j)$ of the gamut G1 and its associated element $(x'_j, y'_j)$ of the gamut G2. Practically, from each element $(x_j, y_j)$ of the gamut G1, associated values $L_j$, $C1_j$, $C2_j$ are deduced by the module IGM (step 10) from the test factor $\beta_{\text{test}}^{-1}$ and the coefficients m and n, such that the value $L_j$ is L0. Then, the modulation value $Ba_0$ being given, the associated value $Y_j$ is obtained by the module IFM (step 20). The associated values $Ec_j$ are obtained by the module ILC (step 30) from the values $C1_j$, $C2_j$ and $Y_j$. Finally, the associated element $(x'_j, y'_j)$ is obtained from the values $Ec_j$.

According to a variant of the module ILCC, the values of the final luminance component L are always higher than the values of the luminance component L":

$$L = L'' + \max(0, mC'_1 + nC'_2)$$

This variant is advantageous because it ensures that the luminance component L does not exceed a potential clipping value that is usually used by the decoder to define a luminance peak. When a luminance peak is required by a decoder and when the luminance component L is given by equation (J1) or (J2), the luminance component L is clipped introducing some artefacts.

On **Fig. 1-8,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

**Fig. 9** represents an exemplary architecture of a device 900 which may be configured to implement a method described in relation with **Fig. 1-8.**

Device 900 comprises following elements that are linked together by a data and address bus 901:

- a microprocessor 902 (or CPU), which is, for example, a DSP (or Digital Signal Processor);
- a ROM (or Read Only Memory) 903;
- a RAM (or Random Access Memory) 904;
- an I/O interface 905 for transmission and/or reception of data, from an application; and
- a battery 906.

According to a variant, the battery 906 is external to the device. Each of these elements of **Fig. 9** are well-known by those skilled in the art and won't be disclosed further. In each of mentioned memory, the word « register » used in the specification can correspond to area of small capacity (some bits) or to very large area (e.g. a whole program or large amount of received or decoded data). ROM 903 comprises at least a program and parameters. Algorithm of the methods according to the disclosure is stored in the ROM 903. When switched on, the CPU 902 uploads the program in the RAM and executes the corresponding instructions.

RAM 904 comprises, in a register, the program executed by the CPU 902 and uploaded after switch on of the device 900, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of inverse-tone mapping or inverse-tone mapper, the picture I is obtained from a source. For example, the source belongs to a set comprising:

- a local memory (903 or 904), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (905), e.g. a wireline interface (for example a bus interface, a wide area network interface, a local area network interface) or a wireless interface (such as a IEEE 802.11 interface or a Bluetooth® interface); and
- a picture capturing circuit (e.g. a sensor such as, for example, a CCD (or Charge-Coupled Device) or CMOS (or Complementary Metal-Oxide-Semiconductor)).

According to different embodiments of the inverse-tone mapping or inverse-tone mapper, the invers-tone mapped picture (or its color components Ec) is sent to a destination; specifically, the destination belongs to a set comprising:

- a local memory (903 or 904), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (905), e.g. a wireline interface (for example a bus interface, a wide area network interface, a local area network interface) or a wireless interface (such as a IEEE 802.11 interface or a Bluetooth® interface); and
- a display.

According to different embodiments, device 900 being configured to implement a method described in relation with **Fig. 1-8,** belongs to a set comprising:

- a mobile device ;
- a communication device ;
- a game device ;
- a tablet (or tablet computer) ;
- a laptop ;
- a still picture camera;
- a video camera ;
- an encoding chip;
- a still picture server; and
- a video server (e.g. a broadcast server, a video-on-demand server or a web server).

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for inverse-tone mapping a picture comprising:

   - obtaining (20) a first component (Y) by applying (20), on a luminance component (L) obtained from the picture, a non-linear function that depends on a modulation value (Ba), in order that the dynamic of the first component (Y) is increased compared to the dynamic of the luminance component (L),

   **characterized in that** said modulation value (Ba) is obtained (50) from said luminance component (L).

2. The method of claims 1, wherein the luminance component (L) is multiplied by the modulation value (Ba) after having applied the non-linear function on the luminance component (L).

3. The method of one of the claims 1-2, wherein the non-linear function is the inverse of either a gamma curve or a Slog curve.

4. The method of one of preceding claim, wherein the method further comprises:

   - obtaining two chrominance components (C1, C2) from the picture; and
   - obtaining (30) at least one color component (Ec) of the inverse-tone mapped picture from the first component (Y) and from said two chrominance components (C1, C2).

5. The method of claim 4, wherein the obtaining (30) at least one color component (Ec) further depends on a first factor (r(L)) that depends on the luminance component (L).

6. The method of claim 5, wherein the first factor (r(L)) is a ratio of the luminance component (L) over the first component (Y).

7. The method of claim 6, wherein the obtaining (30) at least one color component (Ec) comprises:

   - obtaining (231) three intermediate color components (E'c) from said first component (Y) and the two chrominance components (C1, C2); and
- obtaining (232) said at least color component (Ec) by scaling each intermediate color component (E'c) by the first factor (r(L)).

8. The method of claim 6, wherein the obtaining (30) at least one color component (Ec) comprises:

- obtaining (232) two intermediate chrominance component (C'1, C'2) by scaling each chrominance component (C1, C2) according to the first factor; and
- obtaining (231) said at least one color components (Ec) from said first component (Y) and said two intermediate chrominance components (C'1, C'2).

9. The method of claim 8, wherein the obtaining (30) at least one color component (Ec) comprises:

- obtaining (232) two intermediate chrominance component (C'1, C'2) by scaling each chrominance component (C1, C2) by a value equals to the square root of the first factor; and
- obtaining (231) said at least one color components (Ec) by:

  - obtaining (2310) a second component (S) by combining together the two intermediate chrominance components (C'1, C'2) and the first component (Y);
  - obtaining (2311) at least one intermediate color components (Dc) by linearly combining together the intermediate chrominance component (C'1, C'2) and said second component (S); and
  - obtaining (2312) the three color components (Ec) by taking the square of each intermediate color components (Dc).

10. The method of one of the claims 5-10, wherein the obtaining (10) the luminance component (L) from the picture comprises linearly combining together an input luminance component (L") obtained from the picture and two input chrominance components (C"1, C"2) obtained from the picture.

11. The method of claim 10, wherein linearly combining together the input luminance component (L") and the two input chrominance components (C"1, C"2) used coefficients (m, n) which are obtained from a bitstream.

12. The method of claim 10 or 11, wherein the obtaining (10) the two chrominance components (C1, C2) comprises scaling (101) each of the two input chrominance components (C"1, C"2) by a second factor ($\beta(Ba,L(i))$) that depends on both the modulation value (Ba) and the value of each pixel **(i)** of the luminance component (L).

13. The method of one of the claims 2-4, wherein the second factor ($\beta^{-1}(Ba,L(i))$) is obtained by minimizing a gamut distorsion calculated between a targeted gamut (G1) and the gamut (G2) of the picture to be inverse tone-mapped.

14. A device for invers-tone mapping a picture, **characterized in that** it comprises a processor configured to:

- obtaining a first component by applying, on a luminance component obtained from the picture, a non-linear function that depends on a modulation value, in order that the dynamic of the first component is increased compared to the dynamic of the luminance component,

**characterized in that** said modulation value is obtained from said luminance component.

15. A computer program product comprising program code instructions to execute the steps of the method according to claim 1 when this program is executed on a computer.

16. A processor readable medium having stored therein instructions for causing a processor to perform at least the steps of the method according to claim 1.

17. Non-transitory storage medium carrying instructions of program code for executing steps of the method according to one of claims 1 to 13, when said program is executed on a computing device.

Fig. 1

Fig. 2

Fig. 3

Fig. 4

30

C1, C2 → ILEC → E'c → Ec

Y    r(L)

231    232

**Fig. 5a**

30

OETF(r(L))    Y

C1, C2 → → C'1, C'2 → ILEC → Ec

232    231

**Fig. 5b**

10

(C"1, C"2) ────────→ C1, C2

102

L" ─────→ ILCC → L

m,n

**Fig. 6**

10

β  (Ba, L(i))

(C"1, C"2) ────────→ ⊗ → C1, C2

101

102

L" ─────→ ILCC → L

m,n

**Fig. 7**

Fig. 8

Fig. 9

Europäisches
Patentamt

European
Patent Office

Office européen
des brevets

# EUROPEAN SEARCH REPORT

Application Number

EP 15 30 5118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUO YONGQING ET AL: "A LDR image expansion method for displaying on HDR screen", 2013 INTERNATIONAL CONFERENCE ON COMPUTATIONAL PROBLEM-SOLVING (ICCP), IEEE, 26 October 2013 (2013-10-26), pages 234-237, XP032637809, DOI: 10.1109/ICCPS.2013.6893570 [retrieved on 2014-09-05] | 1-5, 14-17 | INV. G06T5/00 H04N19/136 H04N19/186 H04N19/182 |
| A | * the whole document * ----- | 6-13 | |
| X | US 2006/221046 A1 (SATO KO [JP] ET AL) 5 October 2006 (2006-10-05) * paragraphs [0030], [0043]; figures 2,3,5 * ----- | 1,2, 14-17 | |
| X | US 2006/268180 A1 (CHOU CHIH-HSIEN [US]) 30 November 2006 (2006-11-30) * figures 1,2,10 * ----- | 1,14-17 | |
| X | HUO YONGQING ET AL: "Physiological inverse tone mapping based on retina response", VISUAL COMPUTER, SPRINGER, BERLIN, DE, vol. 30, no. 5, 13 September 2013 (2013-09-13), pages 507-517, XP035366280, ISSN: 0178-2789, DOI: 10.1007/S00371-013-0875-4 [retrieved on 2013-09-13] * page 510 * ----- | 1,3, 14-17 | TECHNICAL FIELDS SEARCHED (IPC) G09G G06T H04N |
| X | US 2009/263037 A1 (QIU GUOPING [HK] ET AL) 22 October 2009 (2009-10-22) * paragraphs [0018] - [0021], [0026], [0027]; figures 1,2 * ----- | 1,14-17 | |

-/--

The present search report has been drawn up for all claims

| Place of search | Date of completion of the search | Examiner |
|---|---|---|
| The Hague | 13 August 2015 | Pichon, Jean-Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/297460 A1 (PENG HUAJUN [CN] ET AL) 4 December 2008 (2008-12-04) * paragraphs [0058], [0068], [0072]; figures 6,7 * ----- | 1,14-17 | |

TECHNICAL FIELDS
SEARCHED     (IPC)

The present search report has been drawn up for all claims

| Place of search | Date of completion of the search | Examiner |
|---|---|---|
| The Hague | 13 August 2015 | Pichon, Jean-Michel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5118

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2015

| Patent document cited in search report | | Publication date | Patent family member(s) | | Publication date |
|---|---|---|---|---|---|
| US 2006221046 | A1 | 05-10-2006 | JP 2006276677 A | | 12-10-2006 |
| | | | US 2006221046 A1 | | 05-10-2006 |
| US 2006268180 | A1 | 30-11-2006 | TW I325279 B | | 21-05-2010 |
| | | | US 2006268180 A1 | | 30-11-2006 |
| | | | WO 2006130564 A2 | | 07-12-2006 |
| US 2009263037 | A1 | 22-10-2009 | NONE | | |
| US 2008297460 | A1 | 04-12-2008 | US 2008297460 A1 | | 04-12-2008 |
| | | | WO 2008145027 A1 | | 04-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Rec. ITU-R BT.709-5,* April 2002
- *Rec. ITU-R BT.2020-1,* June 2014

- SMPTE standard: High Dynamic Range Electro-Optical Transfer Function of Mastering Reference Displays. *SMPTE ST 2084,* 2014